# EUROPEAN PATENT APPLICATION

(11) **EP 4 814 741 A1**
(43) Date of publication of application: **30.09.2026**
(21) Application number: 26165005.5
(22) Date of filing: 16.03.2026
(51) Int. Cl.: G06F 16/242, G06N 5/02

(54) **GRAPH-BASED MODELING FOR DATABASE SCHEMA DESCRIPTOR GENERATION**

(30) Priority: 26.03.2025 US 202519090609
(71) Applicant: Microsoft Technology Licensing, LLC, Redmond, WA 98052 (US)
(72) Inventor: TANG, Xinye, Redmond, 98052-6399 (US)
(74) Representative: CMS Cameron McKenna Nabarro Olswang LLP

(57) **Abstract**

A method disclosed herein provides for discovering and extracting database schema information from a database; generating a database graph that graphically depicts the database schema information; generating contextual data that includes or that is derived from the database graph; presenting a language model with the contextual data and an instruction to use the contextual data to generate schema element descriptors for the schema elements; storing the schema element descriptors generated by the language model based on processing of the instruction; and making the stored schema element descriptors available to a query translation system that performs query translation tasks.

## Description

### Summary

According to one implementation, a computer system disclosed herein performs operations that include: discovering and extracting database schema information from a database; generating a database graph that graphically depicts the database schema information; generating contextual data that comprises at least a portion of the database graph; presenting a language model with the contextual data and an instruction to use the contextual data to generate schema element descriptors for schema elements identified in the database graph; storing, in a semantic data catalog, the schema element descriptors generated by the language model based on processing of the instruction; and making the schema element descriptors available as a resource to an external process that performs query translation tasks.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### Brief Description of the Drawings

FIG. 1 illustrates an example computing system architecture that includes a database cataloging system that populates a database-specific semantic catalog with data that, in turn, facilitates query translation tasks of a query translation system.
FIG. 2A illustrates example tables of a database storing database schema information that is discoverable by a database cataloging system employing the herein-disclosed technology.
FIG. 2B illustrates an example database graph that incorporates the database schema information shown in FIG. 2A.
FIG. 2C illustrates example schema element descriptors generated based on the database graph shown in FIG. 2B.
FIG. 3 illustrates aspects of yet another example database cataloging system implementing aspects of the herein-disclosed technology.
FIG. 4 illustrates example operations for automating the creation of database-specific semantic catalog information used to inform query translation operations.
FIG. 5 illustrates an example computing device for use in implementing the described technology.

### Detailed Description

A variety of publicly available language models are capable of generating executable code based on natural-language descriptions of code functionality. Despite this, unique challenges arise in relation to using language models to translate natural language inputs into query language queries that are executable to access to data in a database of interest. Different databases store data according to different organizational structures ("database schemas") in which different types of relationships exist between schema elements, as well as unique and sometimes difficult-to-predict value constraints defined for different schema elements. Although it is typically possible to extract the names of schema elements from a given database, these names alone often do not provide enough information to convey the purpose and format of values stored within various columns of a table. In many cases, database owners do not adequately document this type of information - at least not in a consistent manner that is usable to deploy a query generation tool at scale for many customers utilizing different database schemas. A significant challenge in using generative AI for database query generation, therefore, arises in relation to teaching generative AI to understand the purpose of various schema elements and relationships between schema elements across diverse databases that rely on unique schemas.

To illustrate the complexities surrounding query generation from natural language, consider the natural language query "Show me the employees who worked on projects that took longer than expected." Assume that the database of interest includes an "employees" table and a "projects" table. In this scenario, generating this query likely entails requesting information that is, in the database, jointly spread across the "employees" table and the "projects" table. This task, therefore, requires an understanding of the relationship between "employees" and "projects" - e.g., how is a project represented as "assigned" to an employee in the database? Even if presented with a listing of the database's table names and column names, this relationship may not be self-evident - particularly if the column names are not descriptive of what is stored in the column. In this example, the phrase "took longer than expected" is subjective; consequently, proper translation may depend upon specific columns with values like project duration, expected duration, or deadlines. Even if a generative language model is capable of making some inferences based on column names pertaining to "time," the values stored in these columns may have widely different formats. For example, a date could be stored as a string, a timestamp, or a number.

Given the vast differences in database schemas utilized by different databases and the lack of existing semantic descriptions for the schema elements in these databases, it is onerous and extremely time-consuming to assemble the types of contextual data that make it possible for generative AI to perform query translations such as the example above. The generation and assembly of this contextual information, therefore, serves as a significant impediment to successfully deploying generative AI tools that perform query generation and translation tasks.

One promising approach to using generative AI for database query generation tasks includes preparing a body of contextual data that is passed to a language model as "context" to help the model better understand the database schema of the database that the query is being generated for. For example, the language model may be provided with descriptive information that explains the purpose of each column or the relationships between columns. Presently, generating this type of descriptive information depends upon extremely onerous and largely manual efforts. If, for example, a database owner wants to install and use a generative AI query translation tool that is capable of converting natural language inputs to query language outputs executable on the customer's specific database, the customer may have to manually generate a massive quantity of descriptive information.

The herein-disclosed technology includes a fully automated database cataloging system that documents aspects of a user's database in a semantic catalog. The semantic catalog includes natural language descriptions of schema elements (e.g., the purpose of each table and column), including value constraint information associated with particular tables and columns that make it possible for a language model to infer how to retrieve and process corresponding stored values. Once generated per the methodology disclosed herein, the semantic catalog serves as an index that can be used to populate database query generation requests with relevant contextual data that, in turn, make it possible for generative AI to process such requests and return query language queries that are executable on customer databases to retrieve information of interest.

According to one implementation, a database cataloging system disclosed herein generates descriptions for database schema elements by mining database schema information, assembling a graph of extracted schema information, and employing a generative language model to make inferences based on the graph and apply those inferences toward the generation of natural language descriptions. This methodology leverages the inferencing capability of the generative language model to generate descriptive information that is not explicit in the database itself or explicit within system inputs.

According to one implementation, the information that is generated per the herein-disclosed database cataloging system makes it possible to use AI inferencing to generate descriptions that, in turn, inform query translation tasks. Deploying the disclosed database cataloging system at scale makes it possible for customers to install and use query translation tools that generate query language queries with greater accuracy than other existing approaches, regardless of the particular database schemas employed and the quality of database documentation maintained by the end user.

As used herein, the term "schema elements" refers to any individual component or structure that defines the organization and layout of a database. The schema describes how data is logically stored, how it is related, and how it can be accessed or manipulated. Schema elements include tables, field (columns), primary keys, foreign keys, indexes, constaints, ane more.

As used herein, "query translation" is intended to refer to and encompass a variety of types of query generation tasks that entail translating inputs into a query language query executable on a particular database. One example of query translation is the translation of a natural language query into a query language query that is executable to retrieve data from a select database. Another example of a query translation is the translation of a query that is in one database query language to another query language. Examples of query languages include Structured Query Language (SQL), Kusto Query Language (KQL), Splunk Search Processing Language (SPL), XQuery, Cypher, Gremlin, XQL, and more. The latter scenario (translation between query languages) is relevant in scenarios where users migrate databases between different database systems that use different query languages and potentially store the same data according to different database schemas. In these scenarios, database owners may desire to modify or re-write workloads used in nominal business operations to make such workloads compatible with the new database system following the data migration. This workload modification task entails translating database queries between the query language used by the source database and the query language used by the destination database. All of these types of queries are contemplated as being facilitated by the herein-disclosed technology.

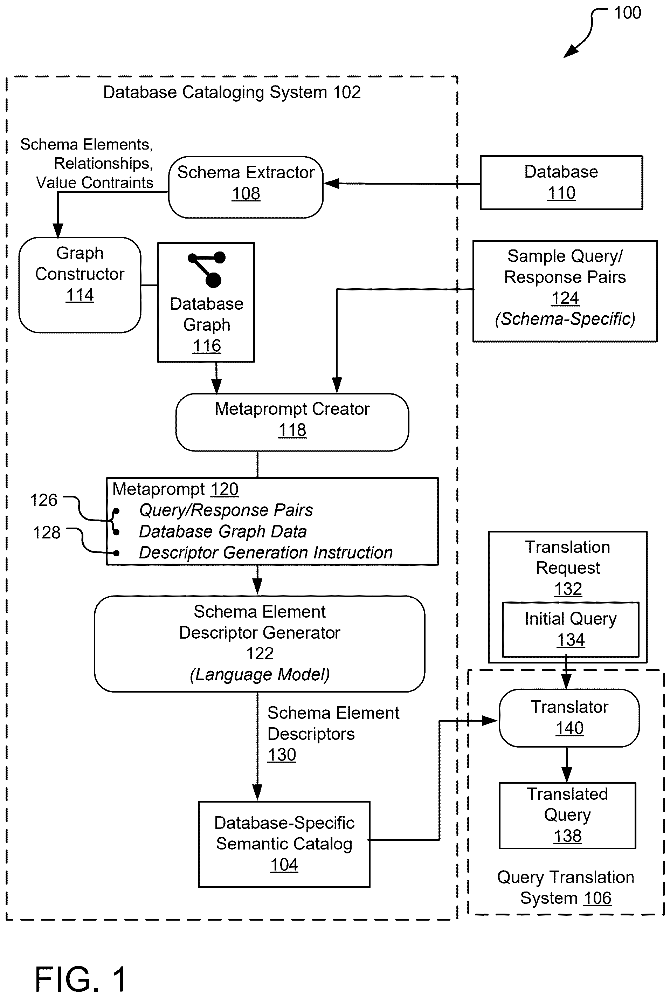

FIG. 1 illustrates an example computing system architecture 100 that includes a database cataloging system 102 that populates a database-specific semantic catalog 104 with data that, in turn, facilitates query translation tasks of a query translation system 106. In one implementation, the database cataloging system 102 is employed to populate the database-specific semantic catalog 104 with data specific to a customer database (e.g., database 110) as part of an initial configuration or onboarding process to ready an instance of the query translation system 106 for deployment and use within the customer's computing environment. The query translation system 106 may, for example, be a web-based, locally installed, or distributed software package that translates user or system inputs (e.g., natural language queries) into queries that are executable on the customer's specific database (e.g., the database 110). Query translation tasks of the query translation system 106 depend, at least in part, upon semantic descriptions that reside within the database-specific semantic catalog 104.

To create the database-specific semantic catalog 104 for the database 110, the database cataloging system 102 is first provided with access credentials to communicate with a database management system (DMBS) that provides an interface to the database 110. Upon obtaining these credentials, a schema extractor 108 utilizes an application programming interface (API) to discover a database schema that is used by the database 110. This API allows the schema extractor 108 to request and obtain the names of tables stored in the database 110 and the names of columns stored in each table. This API allows the schema extractor 108 to explore and process values stored in various columns to infer relationship information. In one implementation, the schema extractor 108 analyzes relationships between values stored in columns of different tables to discover columns that store common (overlapping) values. For example, a column in one table may store a set of values that correspond to unique row identifiers in another table. In some database systems, this type of relationship is called a "foreign key/primary key pair." For example, a table that stores "Orders" may have a "Customer ID" column that stores identifiers that correspond to the primary keys (e.g., row identifiers) in another table titled "Customers." Depending on the query language used by the database 110, there may or may not exist a database operation that is invokable to discover primary and foreign key relationships. However, primary and foreign key relationships can likewise be discovered by analyzing table values to identify sets of column values that likewise appear as row identifiers elsewhere in the database.

In addition to discovering schema relationship information that identifies relationships between columns and tables and between columns in different tables (e.g., primary and foreign keys) within the database 110, the schema extractor 108 also discovers and extracts (e.g., stores) value constraint information. In one implementation, this value constraint information includes data type identifiers that correspond to and identify the data types of values stored in different columns. For example, data types may include numeric data types (e.g., integer values, float values, double values), string data types, data and type data types, a Boolean data type, binary data types, JSON or XML data types, enumerated data types, and more. A column in a database typically stores values that are all of the same, single data type.

In one implementation, the discovery of the above-referenced value constraint information also includes extracting and storing a sampling of the values stored within one or more columns. If, for example, a particular column stores enumerated values (e.g., of data type "Enum," meaning each value is selected from a predefined set of values), the schema extractor 108 may extract the set of predefined selectable enumerated values. Likewise, the discovery of the value constraint information may include the discovery and extraction of a subset of the values stored within a given column. For example, the schema extractor 108 may identify a column titled "ContactAddress" that stores string values. By randomly extracting a sampling of the values stored in this column (e.g., 'john@msn.com,' 'spfitzle@gmail.com,' 'ter872@hotmail.com'), these values can later be used as a basis for inferring that the "ContactAddress" column stores email addresses.

In still other implementations, the discovery of the above-referenced value constraint information includes defining and storing value range data for columns that store numeric data. Range data identifies a minimum and maximum value that encompasses the numeric values in a column. If, for example, a column named "location" stores integers that are all in the range of 00001 to 99950, extraction of this range may subsequently serve as a basis for inferring that the "location" column stores zip codes corresponding to geographic locations in the United States.

The schema extractor 108 provides the discovered database schema information to a graph constructor 114 that, in turn, generates a graphical representation of the extracted information that is, in FIG. 1, shown as "database graph 116." In one implementation, the database graph 116 includes nodes that correspond to the names of schema elements - e.g., tables and columns - and edges between nodes that represent discovered relationships between the schema elements. Edge and/or nodes within the database graph 116 may also be populated. For example, edge metadata may indicate the type of relation indicated by the edge (e.g., indicating which table a column belongs to, or which column stores foreign key values that reference the primary key used to identify entries in another table). Additionally, nodes corresponding to columns may store metadata, including relevant subsets of the discovered value constraint information. For example, a node corresponding to a column may store metadata, including the data type identifier for the columns, a sampling of values from the columns (e.g., selectable enumerated values if the data type indicates enumerated values are stored), or value ranges.

The database graph 116 is passed to a metaprompt creator 118, which is a software component or collection of distributed components that assemble a set of inputs for a language model (e.g., a schema element descriptor generator 122, discussed further below). This set of language model inputs is collectively referred to herein as a "metaprompt" and shown in FIG. 1 as metaprompt 120, which is to be understood as including both a directive (instruction) that is to be executed by a language model in addition to some contextual data that is to be used to help the model make contextual inferences that facilitate execution of the directive.

In one implementation, the metaprompt creator 118 includes a graph-to-text (G2T) system that converts structured graph data, such as a database graph or resource description framework (RDF) triples within the database graph 116 into natural language descriptions that can be processed by a language model. For example, the database graph 116 includes an RDF or JSON-LD file, which contains entities as nodes and relationships as edges. The G2T system extracts the entities and relationships from the database graph 116 and translates the underlying data into sentences. Given graph data that identifies a column node named "EventTime" connected by an edge to a table node named "Events," the G2T system may, therefore, generate a sentence such as "EventTime is a column in the Events table." This translation reformats the graphical data within the database graph 116 into a format that a language model can process and answer questions about.

The metaprompt 120 is provided to and processed by the schema element descriptor generator 122, which is, in one implementation, a language model. As used herein, the term "language model" refers to a model that is trained to analyze textual inputs and generate textual outputs. A language model may, for example, be a natural language processing (NLP) model or a multimodal model that can receive prompts that include various types of input (e.g., text, image, audio, and/or video data) and likewise generate outputs of multiple types that are not necessarily the same as the input type. Further examples of language models include transformer-based models such as generative pre-trained transformer (GPT) models, Open Pretrained Transformer (OPT) models, and Bidirectional Encoder Representations from Transformers (BERT) models, as well as Bioscience Large Open-science Open-access Multilingual (BLOOM) models, seq2seq models, long short-term memory (LSTM) network, and recurrent neural networks (RNNs). Examples of publicly available multimodal language models include the Mistral AI model and the large language model Meta AI (LLaMa) model.

In some implementations, schema element descriptor generator 122 is a multi-model model capable of interpreting structured graph data, in which case the metaprompt creator 118 may not include a G2T system. In these implementations, the metaprompt 120 includes the database graph 116m which contains structured graph data, and the schema element descriptor generator 122 processes the database graph 116 directly rather than processing a text-based representation of the database graph 116.

In some implementations, the metaprompt creator 118 receives inputs that include both the database graph 116 and a set of sample query/response pairs 124 that have been pre-generated for the database 110. The set of sample query/response pairs 124 include database queries that are executable on the database 110 and corresponding actual responses (results) returned by the database 110 in response to executing the database queries. For many database systems, it is routine practice for system administrators to maintain an index of sample queries to the database and corresponding responses output by the database to help with tasks like debugging and database integration with web-based tools and services. In some cases, the set of sample query/response pairs 124 are annotated in natural language text. For example, a select one of the sample query/response pairs 124 includes a query executable on the database 110, a corresponding actual response returned by the database in response to previous execution of the query, and a natural language annotation that explains the purpose of the query. When available, these query/response pairs 124 can be particularly useful in understanding the meaning of different values stored in the database. If, for example, the sample query/response pairs 124 includes a sample query that requests "events with error_code='001' and an annotation that says "this query returns events characterized by hardware errors," this information may serve as a basis for inferring that "error_code=001" is indicative of a hardware error, whereas other values in the "error_code" column indicate different types of errors.

In some implementations where the sample query/response pairs 124 are not available (e.g., the owner of the database 110 does not create or maintain such an index to support its nominal operations), the metaprompt creator 118 does not receive or utilize the sample query/response pairs 124. For example, the database graph 116 is the sole input provided to the metaprompt creator 118.

Based on the above-described inputs received (e.g., the database graph 116 and, optionally, the sample query/response pairs 124), the metaprompt creator 118 generates a metaprompt 120 that includes both contextual data 126 and a descriptor generation instruction 128.

The contextual data 126 includes the database graph 116 in a format that is readable by a language model. In one implementation, the metaprompt 120 includes a text-based representation of the database graph 116 generated by a G2T system. For example, the text-based representation of the database graph 116 includes sentences that describe entity-relation pairs within the database graph 116 (e.g., "the column 'EventType' is included within the table 'Events'"). In other implementations where the schema element descriptor generator 122 has multimodal processing capabilities, the metaprompt 120 includes the database graph 116 in its original form (e.g., as structured graph data).

In addition to the database graph 116 (or text-based representation thereof), the contextual data 126 in the metaprompt 120 is shown to include the sample query/response pairs 124. For example, the sample query/response pairs 124 include 500 question-answer pairs provided by a database admin, with each pair including a query formatted in the query language used to access the database 110 and a corresponding actual result returned by the database in response to previous execution of the query.

The descriptor generation instruction 128 includes an instruction that directs a language model (e.g., the schema element descriptor generator 122) to use the contextual data 126 to generate a semantic description, referred to herein as a "schema element descriptor," for the different schema elements that is represented within the database graph 116 (e.g., a single schema element descriptor for each schema element). In one implementation, the descriptor generation instruction 128 additionally includes detailed instructions that indicate how the language model is to use the contextual data 126. For example, descriptor generation instruction 128 may suggest looking for patterns or similarities in sample values stored in association with specific column identifiers to make inferences about what those columns store and/or to use the data type identifiers defined within the database graph 116 to help generate schema element descriptors 130.

In one implementation, each schema element in the schema element descriptors 130 includes a short (e.g., 1-3 sentence description) for each schema element of multiple of a corresponding schema element (e.g., an entity corresponding to a column or table) referenced in the database graph 116.

In general, the schema element descriptors each describe data that is stored in a particular column or table of the database 110 in a manner that suggests the purpose of that column or table. Schema element descriptors generated for columns may, in some implementations, identify the data type of values stored in the column and/or describe additional value constraint information, such as the meaning of one or more selectable enumerated values (e.g., if the data type is ENUM) or inferences that are generated based on other value constraint information stored in the database graph 116.

Notably, value constraint information within the database graph 116 may be particularly useful in generating the schema element descriptors for graph entities that correspond to columns. If, for example, the database graph 116 identifies a column node "Contact" that stores values of data type "String" and further includes a sampling of values stored including 'john@msn.com,' 'spfitzle@gmail.com,' and 'ter872@hotmail.com', the schema element descriptor generator 122 may generate a corresponding schema element descriptor that reads "This column stores an email address corresponding to the customer record. "

The schema element descriptors 130 are stored in a database-specific semantic catalog 104 that is, in various implementations, made accessible to other system(s). In FIG. 1, the database-specific semantic catalog 104 is shown being accessed by a query translation system 106. The query translation system 106 receives, as input, a translation request 132 that identifies a target database (e.g., the database 110) and that includes an initial query 134 and/or other inputs that are to be translated by a translator 136 into a "translated query 138." For example, the initial query 134 is a natural language description of information that is sought within the database 110. The translated query 138 is, in contrast, a representation of the initial query 134 that is in a query language used by the target database and executable on the target database (e.g., making reference to select schema elements included within the database 110). In another implementation, the initial query 134 is a query in the query language used to access a first database that stores the same data as the target database (e.g., the database 110). In this case, the target database is accessible via a different query language than the first database and potentially stores data according to a different schema. If, for example, data is migrated from the first database (e.g., a source database) to the database 110 (e.g., a destination database), scenarios arise where it is desirable to translate queries originally drafted to access data in the source database into the query language that is used by the destination database.

The query translation system 106 includes a translator 140, which is to be understood as a collection of software components potentially including one or more language models. In response to receiving the translation request 132, the translator 140 retrieves the schema element descriptors 130 for the database 110 (e.g., the target database of the request) from the database-specific semantic catalog 104 and uses these descriptions to determine how to translate the initial query 134 into the query language that is used by the database. This determination entails comparing information requested in the initial query 134 to various of the schema element descriptors 130 and, based on this comparison, identifying a subset of the schema element descriptors 130 that is most likely to store the information requested in the initial query 124. This subset of the schema element descriptors 130 identified as relevant to the initial query 134 (the "relevant descriptors") are then used as a basis for determining a mapping between entities referenced in the initial query 134 and selecting database schema elements.

In one implementation, the translator 140 includes a language model and a software component (e.g., similar to the metaprompt creator 118) that prepares a set of inputs that instruct the language model to translate the initial query 134 into a query that is executable on the target database. This set of inputs includes certain all or some of the schema element descriptors 130 (either alone or in combination with other types of contextual data), and the language model is instructed to use the schema element descriptors 130, e.g., as appropriate, to inform the generation of the translated query 138. In various systems, the language model performing the query translation may be provided with either all of the schema element descriptors 130 for the database 110 or, instead, a select subset of the schema element descriptors 130 that have been identified as relevant to the initial query 134, as generally described above.

Per the above-described operations, the database cataloging system 102 discovers database schema information and presents the discovered information to a language model in a format that enables the language model to use its semantic inferencing capability to make intelligent inferences about the types of data stored in each column and table of the database 110 and to record those inferences as the schema element descriptors 130. This methodology eliminates the need for database owners to painstakingly create and maintain extensive database documentation.

In one implementation, the database cataloging system 102 further includes a watchdog agent (not shown) that detects changes to the schema of the database 110 and, in response to each change, re-executes the above-described operations of the database cataloging system 102 to update the database-semantic catalog accordingly.

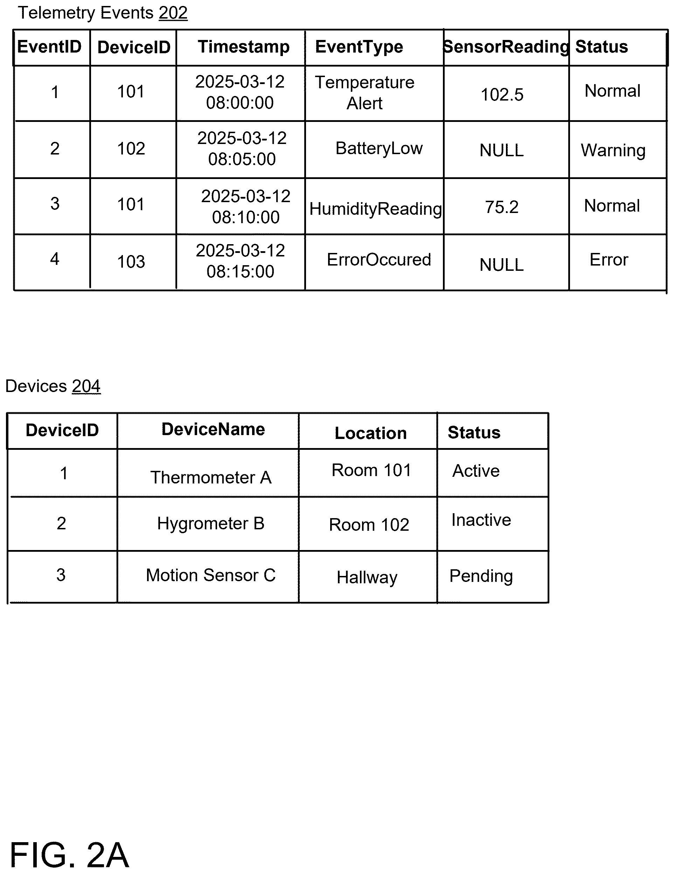

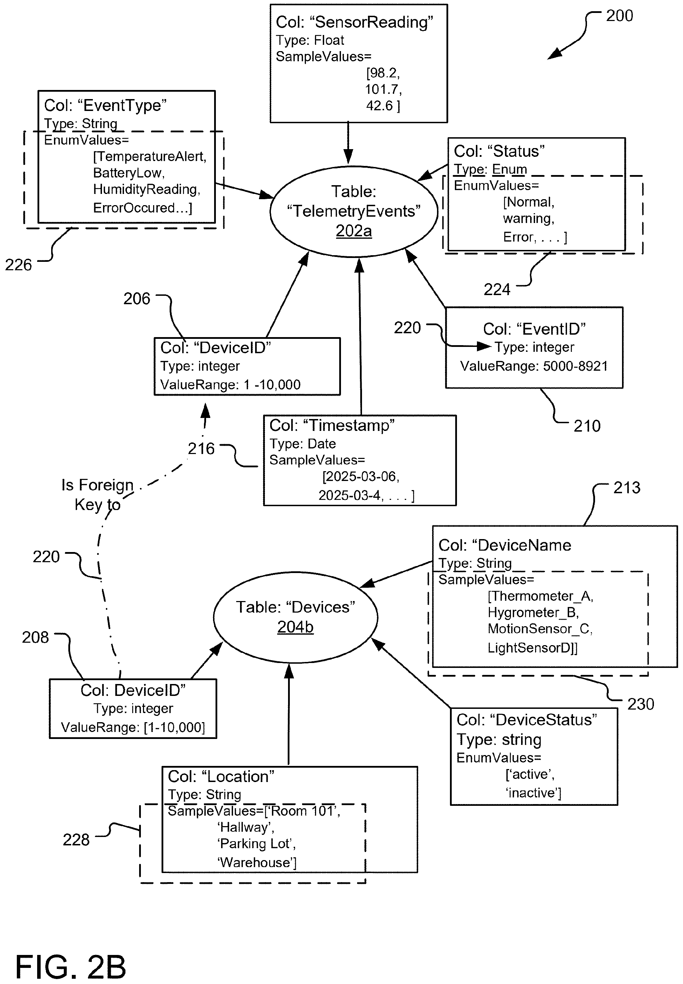

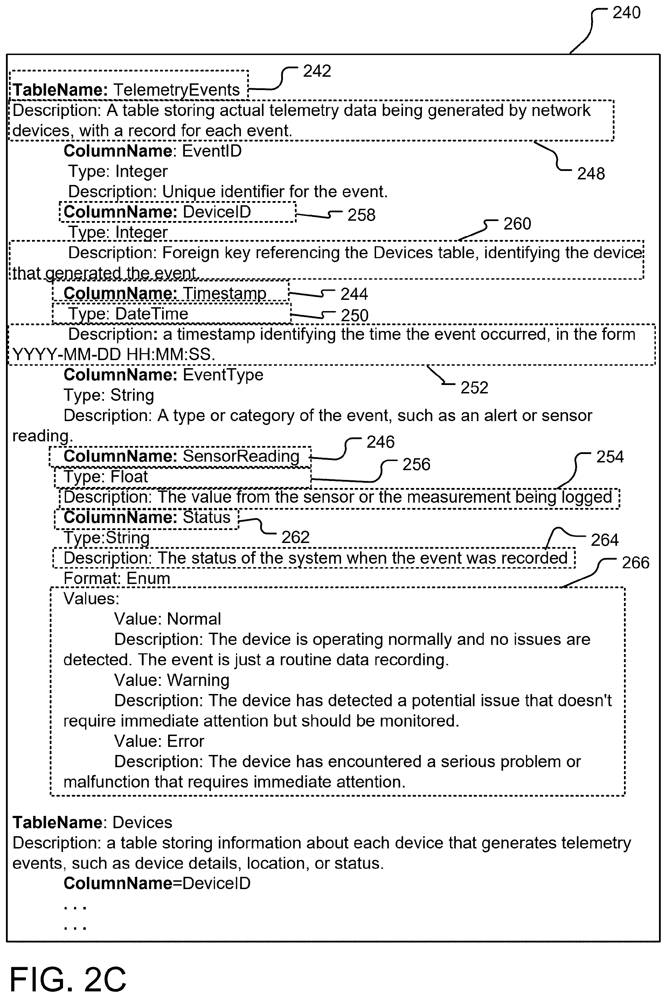

FIG. 2A, 2B, and 2C collectively illustrate aspects of an example process for autonomously generating semantic descriptors for database schema elements. FIG. 2A illustrates example tables 202 and 204 of a database storing database schema information that is discoverable by a database cataloging system employing the herein-disclosed technology. According to one implementation, the tables 202 and 204 are accessed via an API of a schema extractor with characteristics the same or similar to that described with respect to FIG. 1. The schema extractor determines that the table 202 is titled "TelemetryEvents" and has columns "EventID," "DeviceID," "timestamp," "EventType," "SensorReading," and "Status." The schema extractor further determines that the table 204 is titled "devices" and has columns "DeviceID," "DeviceName," "location," and "status." In addition to these schema element names, the schema extractor explores the stored values to determine schema relationship information and value constraint information that is used to construct a database graph, as generally described with respect to FIG. 1.

FIG. 2B illustrates an example database graph 200 that the database cataloging system constructs in response to probing the database shown in FIG. 2A to discover the stored schema information. The database graph 200 includes two oval-shaped nodes 202a and 202b that correspond, respectfully, to entity types "TelemetryEvents" and "Devices" stored in the different tables of FIG. 2A. The database graph 200 includes rectangular-shaped nodes that identify the names of columns (e.g., column nodes 206, 208, 210) in these two tables.

Edges within the database graph 200 represent relationships between nodes. Each edge may have a corresponding relationship type and include metadata identifying the relationship type. For example, a column is related to a table by a "is a column within" relationship type, whereas two columns in different tables may be related by way of a primary/foreign key relationship. In the example shown, solid arrows represent column/table relationships (e.g., with the column node at the base of each solid arrow being included within the table that the arrow points to). An example of a cross-table relationship is shown by edge 220. In the example shown, the edge 220 connects column node 206 and column node 208 and represents a primary/foreign key relationship. Both of these columns are titled "DeviceID."

Here, the integer values in the "Cust ID" column of the table "Orders" correspond to the unique identifiers that identify each customer (e.g., each row) in the table "columns." In this relationship, the values stored in the "Cust ID" column represent "foreign keys" that correspond to the "primary keys" (unique identifiers) that identify each different customer in the "Customers" table. Stated differently, each value stored in the column node 208 ("CustomerID") is a value that also appears somewhere within the set of values stored by node 206 ("ID"). Within the "Devices" table, the "DeviceID" is the primary identifier that uniquely identifies each record. In the TelemetryEvents table, the "DeviceID" is not the primary record identifier but instead an attribute describing an event (e.g., an ID of a device that observed an event). In one implementation, this primary/foreign key relationship is determined by exploring values stored in both "DeviceID" columns, comparing discovered values, and determining, through such comparison, that the two columns jointly reference a common set of values.

In some implementations, metadata stored in edges of the database graph 200 further identifies a relationship subtype for each column-to-column relation - e.g., whether there exists a one-to-many relationship, as is the case when a single customer can place many orders or a one-to-one relationship, as is the case when a resource in one table can be associated with at most one other resource in another table.

Within the database graph 200, the column nodes (e.g., columns nodes 206, 208, 210) store metadata that includes discovered value constraint information. Specifically, the value constraint information includes a data type identifier that is descriptive of the values stored in the corresponding column. For example, the "TelemetryEvents" table includes a column node 210 named "EventID" and is used to store values that are of data type "integer."

In the illustrated example, the included value constraint information is different for different nodes. For some of the column nodes, the value constraint information includes enumerated values (e.g., enumerated values 224, 226). If, for example, a table column stores values of data type "Enum" - meaning each value is selected from a predefined set of values, the set of predefined selected (Enum) values is identified within the metadata that is stored for that column. For other column nodes in the database graph 200, the value constraint information includes a sampling of values extracted from a database column (e.g., sample values 228, 230), such as values that are selected at random or using other sampling criteria. If, for example, the data type for a given column is "Char(n)" (a fixed-length string of length 'n'), the stored metadata for that column may store a sampling of the string values that appear in the column. In some cases, the sample values are limited to a subset of the column values (e.g., a randomly selected set percentage of the column's values). In still other implementations, the value constraint information includes the complete set of values that appear within the corresponding column.

For still other column nodes in the database graph 200 that store numeric data, the value constraint information identifies a value range that includes values stored in the corresponding column, such as by describing the range in terms of min/max values. For example, the column node 208 includes metadata indicating the stored values are integers that mutually fall within a value range of "1 to 10,000."

FIG. 2C illustrates example schema element descriptors 240 generated based on the database graph shown in FIG. 2B by a database cataloging system implementing the disclosed technology. The example schema element descriptors 240 are generated by a language model based on at least some of the schema element identifiers, schema element relationships, and value constraint information stored within the database graph 200 of FIG. 2B.

In one implementation, the database graph 200 of FIG. 2B is translated into a text-based format (e.g., a format readable by a language model) before it is used to generate the schema element descriptors 240 of FIG. 2C. For example, the structured graph data of the database graph 200 is input to a G2T system that translates graphically represented data into textual descriptions (e.g., descriptions that describe rather than illustrate relationships). The GT2 system outputs a text-based representation of the database graph 200 that is, in turn, used to inform the generation of the schema element descriptors 240.

In one implementation, the schema element descriptors 240 are generated by a language model with characteristics the same or similar to the schema element descriptor generator 122 that is described with respect to FIG. 1. The above-described text-based representation of the database graph 200 is provided as an input to this model - either alone or in combination with a set of example query/response pairs for the target database (e.g., if available). In addition to these inputs (collectively, the "contextual data"), the language model is also provided with an instruction to generate the schema element descriptors 240 based on the schema element names, schema element relationships, and value constraint data that is included in the text-based representation of the database graph 200. The instruction may also set forth a specific format for the schema element descriptors 240 that permits structured data handling, such as to facilitate automated look-up and retrieval of select semantic descriptors to support query translation operations.

The example schema element descriptors 240 include, for each of multiple different schema elements defined within the database graph 200, a schema element identifier and a corresponding semantic description. For example, schema element identifier 242 identifies a table named "TelemetryEvents" and includes a corresponding semantic description 248 that reads "a table storing actual telemetry data being generated by network devices, with a record for each event. The example schema element descriptors 240 are formatted so as to clearly identify the columns stored within the "TelemetryEvents" table. The schema element descriptors corresponding to each different column also include a schema element identifier (e.g., schema element identifiers 244, 246) and a corresponding semantic description (e.g., descriptions 252, 254). However, these descriptors additionally include value constraint information, which, in the illustrated example, includes at least a data type identifier (e.g., data type identifiers 250, 256).

Notably, a data type identifier may, when considered in combination with other related value constraint information retained within the database graph 200, provide the language model with a basis for inferring how different schema elements are accessed. For example, the column node 216 of FIG. 2B (titled "timestamp") has a data type identifier "date" and sample values that all share a common data format (e.g., YYYY-MM-DD HH:MM:SS), which allows the language model to generate the semantic description 252, which reads "a timestamp identifying the time the event occurred, in the form YYYY-MM-DD HH:MM:SS."

It is expected that in many scenarios, the language model generating the schema element descriptors 240 may use its semantic inference capability (e.g., learned via model training) to generate some of the schema element descriptors 240. If, for example, the database graph 200 includes a column node titled "Contact" that stores sampled values that are all of the format "XXXXX@domain.com," the language model may infer that this column stores email addresses and, based on this inference, generate a corresponding semantic descriptor such as "this column stores a contact email address corresponding to the [record type/table name]." Alternatively, if the database graph 200 were to include a column node titled "locale" having data type identifier "integer" with sample values that are all in the range 00001 to 99950, the language model may use its natural language inferencing capability to determine that the stored values are zip codes (based on the inferences that that a 5-digit number could be a zip code and that a zip code is another way of identifying a "locale" (the column name). In this case, the resulting schema element descriptor may include a description that reads: "[t]his column stores a zip code corresponding to a location of the [record type]."

Notably, the semantic descriptions included within the schema element descriptors 240 describe at least some of the relationship information that is represented by edges in the database graph 200. For example, the schema element identifier 258 ("DeviceID") has a schema element description 260 that reads "Foreign key referencing the devices table, identifying the device that generated the event." This description semantically conveys the existence of both the foreign/primary key relationship shown by edge 220 in FIG. 2B, as well as the column/table relationship between "DeviceID" and the table "TelemetryEvents" (e.g., by referencing the fact that the device ID is for the device that generated *the event* corresponding to the record).

In the example shown, schema elements corresponding to column nodes that store values of the "Enum" data format have corresponding schema element descriptors that reference each selectable enumerated value. For example, schema element identifier 262 (for the column named "Status") stores string values that are described, per semantic descriptor 264, as values that identify "the status of the system when the event was recorded." Possible selectable enumerated values include "Normal," "Warning," and "Error," all of which are identified within value constraint information 266. In this example, each of the three selectable enumerated values is accompanied by a corresponding semantic description. For example, the enumerated value "normal" has a semantic description 268 that reads, "The device is operating normally, and no issues are detected. The event is just a routine data recording." Notably, the quality of semantic descriptions generated for various enumerated values may depend heavily upon the quantity and quality of relevant contextual data provided as input to the language model that generates the schema element descriptors 240. In some cases, descriptions for enumerated values may be based on inferences drawn from relevant sample query/response pairs that are included in the language model inputs - particularly if the relevant sample/query response pairs have annotations. If, for example, the inputs include a sample query that queries the Table=Telemetry Events on Column=Status for matches for value='warning' and an annotation such as "retrieve events with detected potential issues that could potentially trigger future malfunction," the language model may infer from this that the "warning" value indicates an issue that can cause a malfunction and that has not yet caused a malfunction. In scenarios where annotated sample/query pairs are not available, the language model may struggle to generate descriptors for some or all selectable enumerated values. This information may, in such cases, be excluded from the schema element descriptors 240 for some or all of the selectable enumerated values.

Although not shown in FIG. 2, the schema element descriptors 240 also include schema element descriptors that correspond to other tables and columns of the target database (e.g., the "Devices" table).

In some implementations, the schema element descriptors 240 are stored in a database-specific semantic data catalog that is made available to external systems and processes that perform database query translations (e.g., from natural language to query language or from one query language to another). If, for example, a query translation system receives a query translation request identifying an initial query that references a subset of schema elements by name or other descriptive characteristics, the query translation system may query the database-specific semantic data catalog to identify a subset of the schema element descriptors 240 relevant to the initial query. In one such implementation, the query translation system vectorizes all or a portion of the initial query and computes a similarity metric (e.g., a dot product or cosine similarity) between the resulting vector and various vectorized representations of the various schema element descriptors 240 shown in FIG. 2C. Schema element descriptors determined to be relevant to the initial query (e.g., due to having a dot product or cosine similarity that exceeds a threshold) are then extracted from the database-specific semantic catalog and included (e.g., as contextual data) that is passed to a language model tasked with executing the query translation task.

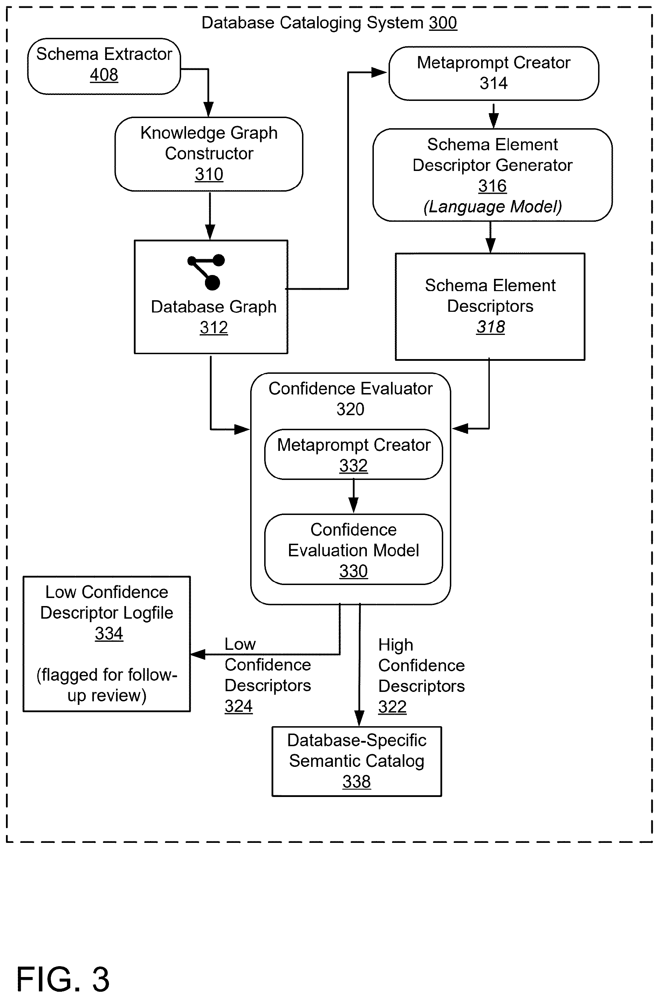

FIG. 3 illustrates aspects of yet another example database cataloging system 300 implementing aspects of the herein-disclosed technology. The database cataloging system 300 includes many of the same elements described with respect to the database cataloging system of FIG. 1, including a schema extractor 308 that discovers schema information from a target database and a graph constructor 310 that translates the discovered schema information into structured graph data (e.g., a knowledge graph). This structured graph data is shown in FIG. 3 as database graph 312. The database graph 312 is provided as input to a metaprompt creator 314 (either alone or in combination with other types of contextual data inputs), and the metaprompt creator 314 queries a language model ("schema element descriptor generator 316") with contextual data that includes a text-based representation of the database graph 312 and an instruction to use the contextual data to generate schema element descriptors for the various entities identified (e.g., as tables or columns) in the database graph 312. The schema element descriptor generator 316 outputs schema element descriptors 318, which may be understood as including the same or similar information as that described with respect to FIG. 2C.

The database cataloging system 300 differs from the other systems described herein in that it further includes a confidence evaluator 320 that evaluates individual schema element descriptors 318 and determines a confidence metric (e.g., a score) indicative of a likelihood of the corresponding descriptor being an accurate description of the corresponding database schema element. Since the schema element descriptors 318 are generated by a generative language model, it is possible that a small number of the schema element descriptors 318 may include model hallucinations - e.g., descriptions, statements, or references that are not logically supported by the corresponding contextual data that was used to create the descriptors (e.g., the inputs included within the metaprompt output by the metaprompt creator 314).

In FIG. 3, the confidence evaluator 320 is shown to include a metaprompt creator 332 (different from the metaprompt creator 314) that prepares a metaprompt for input to a confidence evaluation model 330 (e.g., a language model, which may be either the same model also included in the schema element descriptor generator 316 or a different language model). To generate a confidence score indicative of the accuracy of a select schema element descriptor (of the schema element descriptors 318), the metaprompt creator 332 prepares a metaprompt that includes the same contextual data that the schema element descriptor generator 316 received (and potentially used) as a basis for generating the select schema element descriptor. The contextual data may, for example, include the database graph 312 and, optionally, a set of sample query/response pairs (if such pairs were provided to the schema element descriptor generator 316 tasked with generating the particular schema element descriptor). In addition to the contextual data comprising the database graph 312, the metaprompt additionally includes a directive instructing the confidence evaluation model 330 to determine and output a score (e.g., from 1 to 10 or other range) indicating how well the particular schema element descriptor is supported by the contextual data.

In one implementation, the confidence evaluation model 330 is an off-the-shelf language model that is not specially trained for the task of confidence evaluation. Instead, the off-the-shelf language model is trained to process and understand semantic data such that it is capable of comparing the select semantic element descriptor to the contextual data that was used as a basis for generating the select semantic descriptor to determine if, in fact, the select semantic element descriptor is supported by the contextual data. Upon receiving the above-described metaprompt output by the metaprompt creator 332, the confidence evaluation model 330 compares the contextual data within the received metaprompt to the select schema element descriptor that it is evaluating and follows the directive to generate a score indicative of a strength of correlation between the two. When the confidence score

A confidence score below a predefined threshold indicates low confidence in the accuracy of the select schema element descriptor - meaning the descriptor is likely to be the product of model hallucination, while a confidence score above the predefined threshold indicates a comparatively high confidence in the accuracy of the select schema element descriptor - meaning the descriptor is unlikely to be the product of model hallucination.

The confidence evaluator 320 then classifies each received evaluated schema element descriptor as either a high confidence descriptor (among high confidence descriptors 322) or a low confidence descriptor (among low confidence descriptors 324) based on the corresponding computed confidence score. For example, a schema element descriptor is classified as a high confidence descriptor when the corresponding confidence score satisfies predefined criteria generally indicative of a first confidence level (e.g., a confidence level indicating a low likelihood of model hallucinations.) Likewise, a schema element descriptor is classified as a low confidence descriptor when the corresponding confidence score does not satisfy the predefined criteria. For example, a schema element descriptor that exceeds a predefined threshold is classified as a high-confidence descriptor, while a schema element descriptor that does not exceed the predefined threshold is classified as a low-confidence descriptor.

In the database cataloging system 300, the low confidence descriptors 324 are flagged for follow-up (e.g., manual review). For example, the confidence evaluator 320 updates a low confidence descriptor logfile 334 to identify the low confidence descriptors 324 and declines to record the low confidence descriptors 324 in the database-specific semantic catalog 338. In contrast, the high confidence descriptors 322 are recorded in the database-specific semantic catalog 338. In this manner, the confidence evaluator 320 acts as a safeguard to identify and flag a subset of the schema element descriptors 318 that are the product of model hallucinations, thereby ensuring that the database-specific semantic catalog 338 does not store schema element descriptors that are inaccurate.

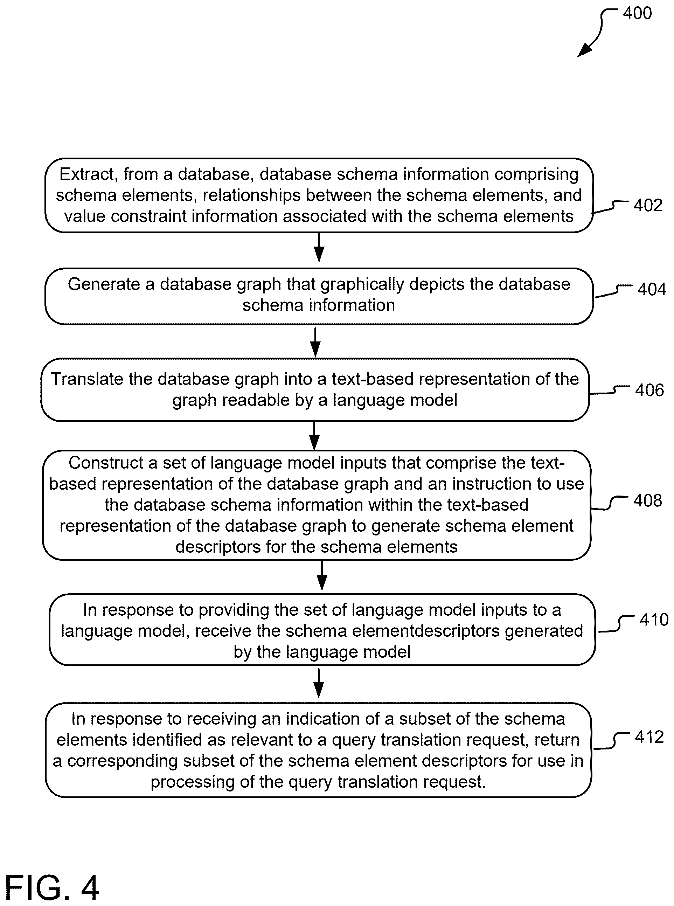

FIG. 4 illustrates example operations 400 for automating the creation of database-specific semantic catalog information used to inform query translation operations. An extraction operation 402 extracts, from a database, database schema information, including schema elements, such as names of tables and columns, primary key and foreign key relationships, indexes, and constraints, and value constraint information descriptive of data that is stored in associations with different schema elements. Executing the extraction operation 402 may, for example, entail using an API to extract schema element names and to access and analyze (e.g., compare) database values to determine relationships between schema elements.

A graph generation operation 404 generates a database graph that graphically depicts the database schema information extracted from the database. For example, the database graph stores structured graph data that includes nodes corresponding to the schema elements and edges between nodes that represent the relationships between the schema elements. Metadata may be stored in the nodes and/or edges of the graph - e.g., to identify types of relationships between nodes and/or relevant value constraint information.

A translation operation 406 translates the database graph into a text-based representation of the database graph that is readable by a language model. For example, the database graph is input to a G2T system that generates the text-based representation. The text-based representation includes semantic descriptions of relationships that are graphically illustrated (e.g., by edges) in the database graph.

A construction operation 408 constructs a set of language model inputs that include at least the text-based representation of the database graph and an instruction to use the text-based representation of the database graph to generate schema element descriptors for the schema elements (e.g., a single descriptor for each schema element that identifies the schema element by name and that also semantically describes the data stored by the schema element).

A language model interaction step 410 provides the set of language model inputs to a language model and, in response, receives the schema element descriptors for the schema elements. In some implementations, the schema element descriptors are cataloged for subsequent retrieval.

A descriptor request and retrieval operation 412 subsequently accesses the schema element descriptors and provides a subset of the schema element descriptors to an external process. In one implementation, the descriptor request and retrieval operation 412 includes receiving an indication of a specific subset of the schema elements identified as relevant to a query translation request and, in response, returning a corresponding subset of the schema element descriptors for use in processing the query translation request. For example, a query translation system identifies the subset of schema elements that are relevant to the query translation request, requests (and receives) the schema element descriptors for the subset, and uses the retrieved subset of schema element descriptors to translate a natural language query into a query language query executable on the database.

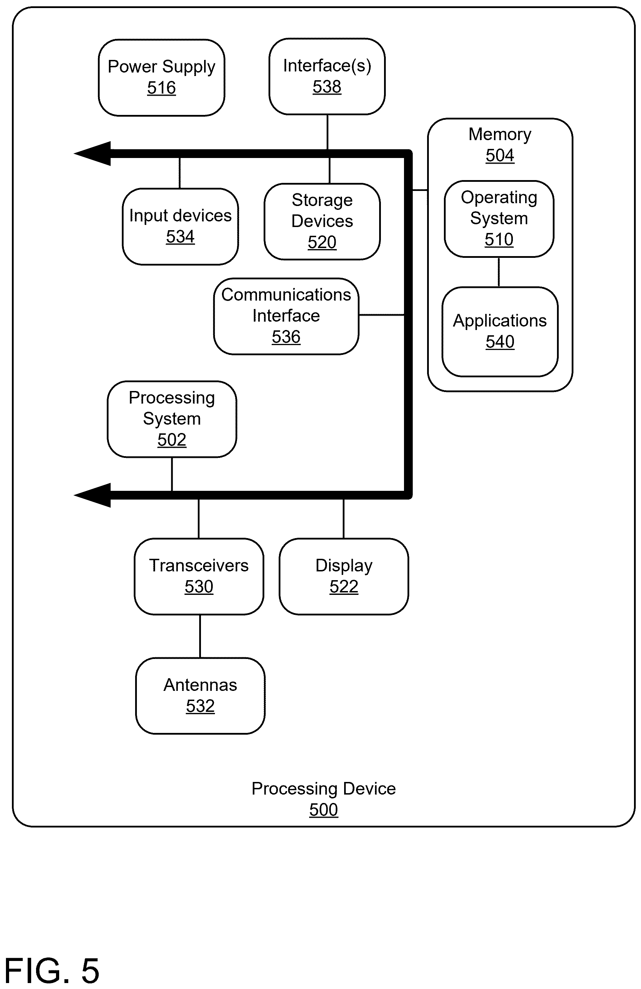

FIG. 5 illustrates an example computing device 500 for use in implementing the described technology. The computing device 500 may be a client computing device (such as a laptop computer, a desktop computer, or a tablet computer), a server/cloud computing device, an Internet-of-Things (IoT), any other type of computing device, or a combination of these options. The computing device 500 includes a processing system 502 and a memory 504. The memory 504 generally includes both volatile memory (e.g., RAM) and nonvolatile memory (e.g., flash memory), although one or the other type of memory may be omitted. An operating system 510 resides in the memory 504 and is executed by the processing system 502. In some implementations, the computing device 500 includes and/or is communicatively coupled to storage 520.

In the example computing device 500, as shown in FIG. 5, one or more software modules, segments, and/or processors, such as applications 550 (e.g., the database cataloging system 102 or the query translation system 106 of FIG. 1) are loaded into the memory 504 by the operating system 510 and executed by the processor(s) 572. The storage 520 may store a database, sample query response pairs executable on the database (e.g., the sample query/response pairs 124 of FIG. 1), a database graph (e.g., the database graph 116 of FIG. 1), or semantic data catalog information.

The computing device 500 may include one or more communication transceivers 530, which may be connected to one or more antenna(s) 532 to provide network connectivity (e.g., mobile phone network, Wi-Fi^{®}, Bluetooth^{®}) to one or more other servers, client devices, IoT devices, and other computing and communications devices. The computing device 500 may further include a communications interface 536 (such as a network adapter or an I/O port, which are types of communication devices) that is used to establish connections over a wide-area network (WAN) or local-area network (LAN). It should be appreciated that the network connections shown are exemplary and that other communications devices and means for establishing a communications link between the computing device 500 and other devices may be used.

The computing device 500 may include one or more input devices 534 such that a user may enter commands and information (e.g., a keyboard, trackpad, or mouse). These and other input devices may be coupled to the server by one or more interfaces 538, such as a serial port interface, parallel port, or universal serial bus (USB). The computing device 500 may further include a display 522, such as a touchscreen display.

The computing device 500 may include a variety of tangible processor-readable storage media and intangible processor-readable communication signals. Tangible processor-readable storage can be embodied by any available media that can be accessed by the computing device 500 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes but is not limited to RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 500. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Described herein is a method for discovering and extracting database schema information from a database; generating a database graph that graphically depicts the database schema information; generating contextual data that includes or that is derived from the database graph; presenting a language model with the contextual data and an instruction to use the contextual data to generate schema element descriptors for the schema elements; storing the schema element descriptors generated by the language model based on processing of the instruction; and making the stored schema element descriptors available to a query translation system that performs query translation tasks.

In some aspects, the techniques described herein relate to a method including: extracting database schema information from a database, the database schema information including schema elements, relationships between the schema elements, and value constraint information associated with the schema elements; generating a database graph that graphically depicts the database schema information, the database graph including nodes corresponding to the schema elements and edges between nodes that represent the relationships between the schema elements; translating the database graph into a text-based representation readable by a language model; constructing a set of language model inputs that include the text-based representation of the database graph and an instruction to use the database schema information within the text-based representation of the database graph to generate schema element descriptors for the schema elements; in response to providing the set of language model inputs to a language model, receiving the schema element descriptors generated by the language model; and in response to receiving an indication of a subset of the schema elements identified as relevant to a query translation request, returning a corresponding subset of the schema element descriptors for use in processing of the query translation request.

In some aspects, the techniques described herein relate to a method, further including: constructing a second set of language model inputs that includes: contextual data including the subset of the schema elements and the corresponding subset of the schema element descriptors; and a directive to execute a query translation task based; and receiving, from a language model, a translated query generated based, at least in part, on the contextual data.

In some aspects, the techniques described herein relate to a method, further including: cataloging the schema element descriptors in a semantic data catalog that identifies the database; and retrieving the subset of the schema element descriptors from the semantic data catalog in response to receiving the indication of the subset of the schema elements identified as relevant to the query translation request

In some aspects, the techniques described herein relate to a method, wherein the set of language model inputs further includes a set of sample query-response pairs including queries executed on the database and corresponding responses returned by the database; and wherein the instruction within the set of language model inputs directs the language model to generate the schema element descriptors for the schema elements based on the text-based representation of the database graph and the set of sample query-response pairs.

In some aspects, the techniques described herein relate to a method, wherein the value constraint information includes data type identifiers for values stored in columns of the database and enumerated values for at least some of the columns, and wherein the database graph identifies the data type identifiers and the enumerated values.

In some aspects, the techniques described herein relate to a method, wherein the instruction within the set of language model inputs directs the language model to generate the schema element descriptors for the schema elements based on the data type identifiers and the enumerated values.

In some aspects, the techniques described herein relate to a method, further including: determining whether a select schema element descriptor the schema element descriptors is a product of model hallucination by executing confidence-evaluation operations that include: constructing a third language model metaprompt, the third language model metaprompt including: select schema element descriptor; contextual data including the database graph; and an instruction to generate a confidence score quantifying how well the select schema element descriptor is supported by the contextual data; receiving the confidence score generated by a language model based on processing of the third language model metaprompt; cataloging the select schema element descriptor in response to determining that the confidence score satisfies predefined criteria indicative of a first confidence range; flagging the select schema element descriptor for manual review in response to determining that the confidence score does not satisfy the predefined criteria indicative of the first confidence range.

In some aspects, the techniques described herein relate to a system including: Memory; A processing system; A semantic catalog creation system stored in the memory and executable by the processing system to: extract database schema information from a database, the database schema information including schema elements, relationships between the schema elements, and value constraint information associated with the schema elements; generate a database graph that graphically depicts the database schema information; translate the database graph into a text-based representation readable by a language model; construct a first language model metaprompt that includes the text-based representation of the database graph and an instruction to use the database schema information within the text-based representation of the database graph to generate schema element descriptors for the schema elements; store, in a semantic data catalog, the schema element descriptors generated by the language model in response to providing the language model with the first language model metaprompt; and a query translation system stored in the memory and executable by the processing system to: receive a query translation request that includes an initial query and that requests as output a translated query in a select database query language; identify a subset of the schema elements referenced in the initial query; retrieve, from the semantic data catalog, a subset of the schema element descriptors corresponding to the subset of the schema elements; and generate the translated query based, at least in part, on the subset of the schema element descriptors.

In some aspects, the techniques described herein relate to a system, wherein the query translation system generates the translated query by operations that include: constructing a second language model metaprompt that instructs execution of a query translation task based on the subset of the schema element descriptors; providing the second language model metaprompt to a second language model; and receiving, from the second language model, the translated query.

In some aspects, the techniques described herein relate to a system, wherein the first language model metaprompt further includes a set of sample query-response pairs including queries executed on the database and corresponding responses returned by the database; and wherein the instruction within the first language model metaprompt directs the language model to generate the schema element descriptors for the schema elements based on the text-based representation of the database graph and the set of sample query-response pairs.

In some aspects, the techniques described herein relate to a system, wherein the value constraint information includes data type identifiers for values stored in columns of the database and enumerated values for at least some of the columns, and wherein the database graph identifies the data type identifiers and the enumerated values.

In some aspects, the techniques described herein relate to a system, wherein the instruction within the first language model metaprompt directs the language model to generate the schema element descriptors for the schema elements based on the data type identifiers and the enumerated values.

In some aspects, the techniques described herein relate to a system, wherein the semantic catalog creation system is further executable to: determine whether a select schema element descriptor of the schema element descriptors is a product of model hallucination by executing confidence-evaluation operations that include: constructing an additional language model metaprompt, the additional language model metaprompt including the select schema element descriptor, contextual data including at least a portion of the database graph, and an instruction to generate a confidence score quantifying how well the select schema element descriptor is supported by the contextual data; receiving the confidence score generated by a language model based on processing of the additional language model metaprompt; cataloging the select schema element descriptor in response to determining that the confidence score satisfies predefined criteria indicative of a first confidence range; and flagging the select schema element descriptor for manual review in response to determining that the confidence score does not satisfy the predefined criteria indicative of the first confidence range.

In some aspects, the techniques described herein relate to a system, wherein the database graph includes nodes corresponding to the schema elements, edges between nodes that represent the relationships between the schema elements, and metadata that includes the value constraint information.

In some aspects, the techniques described herein relate to one or more tangible computer-readable storage media encoding processor-executable instructions for executing a computer process, the computer process including: discovering and extracting database schema information from a database, the database schema information including schema elements, relationships between the schema elements, and value constraint information associated with the schema elements; generating a database graph that graphically depicts the database schema information; generating contextual data that includes a portion of the database graph or data derived from the database graph; presenting a language model with the contextual data and an instruction to use the contextual data to generate schema element descriptors for the schema elements; store, in a semantic data catalog, the schema element descriptors generated by the language model based on processing of the instruction; receiving, from an external process, an indication of a subset of the schema elements relevant to a query translation request; and in response to receiving the indication, returning to the external process a corresponding subset of the schema element descriptors for use in processing of the query translation request.

In some aspects, the techniques described herein relate to one or more tangible computer-readable storage media, wherein the contextual data further includes a set of sample query-response pairs including queries executed on the database and corresponding responses returned by the database.

In some aspects, the techniques described herein relate to one or more tangible computer-readable storage media, wherein thevalue constraint information includes data type identifiers for values stored in columns of the database and enumerated values for at least some of the columns, and wherein the database graph identifies data type identifiers and the enumerated values.

In some aspects, the techniques described herein relate to one or more tangible computer-readable storage media, wherein the instruction directs the language model to generate the schema element descriptors based on the data type identifiers and the enumerated values.

In some aspects, the techniques described herein relate to one or more tangible computer-readable storage media, wherein the computer process further includes: constructing an additional set of language model inputs, the additional set of language model inputs including a select schema element descriptor, contextual data including at least a portion of the database graph, and an instruction to generate a confidence score quantifying how well the select schema element descriptor is supported by the contextual data; receiving the confidence score from a language model based on processing of the additional set of language model inputs; cataloging the select schema element descriptor in response to determining that the confidence score satisfies predefined criteria indicative of a confidence level; and flagging the select schema element descriptor for manual review in response to determining that the confidence score does not satisfy the predefined criteria indicative of the confidence level.

In some aspects, the techniques described herein relate to one or more tangible computer-readable storage media, wherein the database graph includes nodes corresponding to the schema elements, edges between nodes that represent the relationships between the schema elements, and metadata that identifies the value constraint information.

The logical operations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order unless explicitly claimed otherwise or a specific order is inherently necessitated by the claim language. The above specification, examples, and data, together with the attached appendices, provide a complete description of the structure and use of example implementations.

## Claims

1. A method comprising:
extracting database schema information from a database (110), the database schema information comprising schema elements, relationships between the schema elements, and value constraint information (266) associated with the schema elements;
generating a database graph (312) (200) (116) that graphically depicts the database schema information, the database graph (312) (200) (116) including nodes corresponding to the schema elements and edges between nodes that represent the relationships between the schema elements;
translating the database graph (312) (200) (116) into a text-based representation readable by a language model;
constructing a set of language model inputs that comprise the text-based representation of the database graph (312) (200) (116) and an instruction to use the database (110) schema information within the text-based representation of the database (110) graph (312) (200) (116) to generate schema element descriptors (1130) (318) (240) (130) for the schema elements;
in response to providing the set of language model inputs to a language model, receiving the schema element descriptors (1130) (318) (240) (130) generated by the language model; and
in response to receiving an indication of a subset of the schema elements identified as relevant to a query translation request (132), returning a corresponding subset of the schema element descriptors (318) (240) (130) for use in processing of the query translation request (132).

2. The method of claim 1, further comprising:
constructing a second set of language model inputs that includes:
contextual data including the subset of the schema elements and the corresponding subset of the schema element descriptors; and
a directive to execute a query translation task based; and
receiving, from a language model, a translated query generated based, at least in part, on the contextual data.

3. The method of claim 1, further comprising:
cataloging the schema element descriptors in a semantic data catalog that identifies
the database; and
retrieving the subset of the schema element descriptors from the semantic data catalog in response to receiving the indication of the subset of the schema elements identified as relevant to the query translation request

4. The method of claim 1, wherein the set of language model inputs further comprises a set of sample query-response pairs comprising queries executed on the database and corresponding responses returned by the database;
and wherein the instruction within the set of language model inputs directs the language model to generate the schema element descriptors for the schema elements based on the text-based representation of the database graph and the set of sample query-response pairs.

5. The method of claim 1, wherein the value constraint information includes data type identifiers for values stored in columns of the database and enumerated values for at least some of the columns, and wherein the database graph identifies the data type identifiers and the enumerated values.

6. The method of claim 5, wherein the instruction within the set of language model inputs directs the language model to generate the schema element descriptors for the schema elements based on the data type identifiers and the enumerated values.

7. The method of claim 1, further comprising:
determining whether a select schema element descriptor the schema element descriptors is a product of model hallucination by executing confidence-evaluation operations that comprise:
constructing a third language model metaprompt, the third language model metaprompt comprising:
select schema element descriptor;
contextual data including the database graph; and
an instruction to generate a confidence score quantifying how well the select schema element descriptor is supported by the contextual data;
receiving the confidence score generated by a language model based on processing of the third language model metaprompt;
cataloging the select schema element descriptor in response to determining that the confidence score satisfies predefined criteria indicative of a first confidence range;
flagging the select schema element descriptor for manual review in response to determining that the confidence score does not satisfy the predefined criteria indicative of the first confidence range.

8. A system comprising:
Memory;
A processing system (502);
A semantic catalog creation system stored in the memory (504) and executable by the processing system (502) to:
extract database schema information from a database (110), the database (110) schema information comprising schema elements, relationships between the schema elements, and value constraint information (266) associated with the schema elements;
generate a database graph (312) (200) (116) that graphically depicts the database (110) schema information;
translate the database graph (312) (200) (116) into a text-based representation readable by a language model;
construct a first language model metaprompt (120) that comprises the text-based representation of the database (110) graph (312) (116) and an instruction to use the database (110) schema information within the text-based representation of the database (110) graph (312) (200) (116) to generate schema element descriptors (318) (240) (130) for the schema elements;
store, in a semantic data catalog, the schema element descriptors (318) (240) (130) generated by the language model in response to providing the language model with the first language model metaprompt (120); and
a query translation system (106) stored in the memory (504) and executable by the processing system to:
receive a query translation request (132) that includes an initial query (134) and that requests as output a translated query (138) in a select database (110) query language;
identify a subset of the schema elements referenced in the initial query (134);
retrieve, from the semantic data catalog, a subset of the schema element descriptors (318) (240) (130) corresponding to the subset of the schema elements; and
generate the translated query (138) based, at least in part, on the subset of the schema element descriptors (318) (240) (130).

9. The system of claim 8, wherein the query translation system generates the translated query by operations that include:
constructing a second language model metaprompt that instructs execution of a query translation task based on the subset of the schema element descriptors;
providing the second language model metaprompt to a second language model; and
receiving, from the second language model, the translated query.

10. The system of claim 8, wherein the first language model metaprompt further comprises a set of sample query-response pairs comprising queries executed on the database and corresponding responses returned by the database;
and wherein the instruction within the first language model metaprompt directs the language model to generate the schema element descriptors for the schema elements based on the text-based representation of the database graph and the set of sample query-response pairs.

11. The system of claim 8, wherein the value constraint information includes data type identifiers for values stored in columns of the database and enumerated values for at least some of the columns, and wherein the database graph identifies the data type identifiers and the enumerated values.

12. The system of claim 11, wherein the instruction within the first language model metaprompt directs the language model to generate the schema element descriptors for the schema elements based on the data type identifiers and the enumerated values.

13. The system of claim 8, wherein the semantic catalog creation system is further executable to:
determine whether a select schema element descriptor of the schema element descriptors is a product of model hallucination by executing confidence-evaluation operations that comprise:
constructing an additional language model metaprompt, the additional language model metaprompt comprising the select schema element descriptor, contextual data comprising at least a portion of the database graph, and an instruction to generate a confidence score quantifying how well the select schema element descriptor is supported by the contextual data;
receiving the confidence score generated by a language model based on processing of the additional language model metaprompt;
cataloging the select schema element descriptor in response to determining that the confidence score satisfies predefined criteria indicative of a first confidence range; and
flagging the select schema element descriptor for manual review in response to determining that the confidence score does not satisfy the predefined criteria indicative of the first confidence range.

14. The system of claim 8, wherein the database graph includes nodes corresponding to the schema elements, edges between nodes that represent the relationships between the schema elements, and metadata that includes the value constraint information.

15. One or more tangible computer-readable storage (520) media encoding processor-executable instructions for executing a computer process, the computer process comprising:
discovering and extracting database schema information from a database (110), the database schema information comprising schema elements, relationships between the schema elements, and value constraint information (266) associated with the schema elements;
generating a database graph (312) (200) (116) that graphically depicts the database (110) schema information;
generating contextual data (126) that comprises a portion of the database (110) graph (312) (200) (116) or data derived from the database (110) graph (312) (200) (116);
presenting a language model with the contextual data (126) and an instruction to use the contextual data (126) to generate schema element descriptors (318) (240) (130) for the schema elements;
store, in a semantic data catalog, the schema element descriptors (318) (240) (130) generated by the language model based on processing of the instruction;
receiving, from an external process, an indication of a subset of the schema elements relevant to a query translation request (132); and
in response to receiving the indication, returning to the external process a corresponding subset of the schema element descriptors (318) (240) (130) for use in processing of the query translation request (132).
